# EUROPEAN PATENT SPECIFICATION

(11) **EP 3 406 167 B1**
(45) Date of publication and mention of the grant of the patent: **10.08.2022**
(21) Application number: 17175532.5
(22) Date of filing: 12.06.2017
(51) Int. Cl.: A47J 37/06

(54) **GRIDDLE PLATE SUSPENSION ASSEMBLY**
GRILLPLATTENAUFHÄNGUNGSANORDNUNG
ENSEMBLE DE SUSPENSIONS DE PLAQUE DE GALETTIÈRE

(30) Priority: 22.05.2017 CN 201710364353
(43) Date of publication of application: 28.11.2018
(73) Proprietor: Jiangmen City Xinhui Henglong Innovative Housewares Co., Ltd., Jiangmen Guangdong 529156 (CN)
(72) Inventor: NIE, Huayao, Jiangmen, Guangdong (CN)
(74) Representative: Secerna LLP

(56) References cited:
- EP-A1- 2 965 672
- DE-U1- 29 822 062
- US-A- 3 746 837
- US-A1- 2006 049 169
- US-A1- 2010 126 357
- US-A1- 2014 305 317
- US-A1- 2015 312 964

## Description

### FIELD OF THE INVENTION

The present invention relates to the field of food baking and processing, and particularly relates to a griddle plate suspension assembly.

Griddle plates for placing foods and heating elements for heating the griddle plates are needed by the existing baking devices used for baking bread, waffle, sandwich, hamburger and other pastries, and broiling barbecuing meat, vegetable and other food materials. A common method to fixedly connect the griddle plate and the heating element in the prior art is that: the griddle plate and the heating element are retained at two ends thereof through a fastener structure, a pressure spring is arranged between the griddle plate and the heating element to fix the locations of the two relatively; a gap between the griddle plate and the heating element is inevitable due to the middle elastic extruding of the pressure spring, and the gap will reduce the heat conducting performance of the heating element, decrease the cooking and baking efficiency of the griddle plate, and increases the heat amount needed by baking the food; due to the middle extruding of the pressure spring on the heating element and the griddle plate, it is difficult to keep the heating element and the griddle plate to be mutually parallel, the heat on the griddle plate is uneven, the cooked degrees of the food are different, and it is even possible to have the situation that parts of the food are not completely cooked or sear. For example, the prior patent application EP2965672A1 discloses a fixing mechanism. However, the fixing mechanism in EP2965672A1 only comprises a projection and a spring which work with the recess of the griddle plate so that the griddle plate is fixed in place. When the griddle plate is removed, the heating part can easily bounce upward and out of the housing because of the loss of pressure above the heating part. Even when the fixing mechanism is loosened, because the spring is released, it is easy to cause the heating part and griddle plate to bounce together, which will bring danger to the user. Therefore, it is necessary to design a mechanism which is capable of baking the food more quickly and in a more energy-saving manner, and fitting the griddle plate and the heating element closely.

### SUMMARY OF THE INVENTION

The present invention is intended to solve the technical problems mentioned above by providing a griddle plate suspension assembly which is capable of baking the food more quickly and in a more energy-saving manner, and making the griddle plate fit the heating element closely to implement uniform heating.

The present invention is implemented through the following technical solutions.

A griddle plate suspension assembly comprises a housing, a griddle plate and a heating element arranged in the housing, and further comprises a fastener connecting the housing with the griddle plate, and an elastic part pushing the heating element to the griddle plate, the fastener comprises a recess arranged on the griddle plate, a bulge arranged on the housing and movably embedded in the recess, a lever with one end connected with the bulge, and a button pulling the other end of the lever to make the bulge leave the recess, the bulge rotationally enters the recess, and the housing is provided with a tension spring pulling the bulge to enter the recess, and the griddle plate suspension assembly comprises a stopper controlling the travelling of the heating element, the stopper comprises a guidepost passing through the heating element along the pushing direction of the elastic part, the guidepost is provided at one end thereof with a block piece, wherein the one end of the guidepost passes through the heating element, and the other end of the guidepost is connected with the housing.

Preferably, the elastic part comprises a pressure spring/torsional spring connecting the housing with the heating element.

Preferably, the housing is provided with a retaining seat sheathing the pressure spring.

Preferably, the fastener comprises location holes arranged on the housing and location lugs arranged on the griddle plate and corresponding to the location holes.

Preferably, the heating element comprises a groove sinking towards the elastic part, and the block piece is located in the groove.

The advantageous technical effects are as follows: as compared with the prior art, the griddle plate suspension assembly of the present invention enables the griddle plate to be fixed relative to the location of the housing through the fastener, then enables the heating element to be fit to the griddle plate through the elastic extruding of the elastic part, so that the heat generated by the heating element can be delivered to the griddle plate quickly and uniformly, and the temperature of the griddle plate increases quickly. The efficient heat conduction between the heating element and the griddle plate can effectively save the energy needed for baking the food; and the heating element and the griddle plate can be suspended in the housing by the cooperation between the elastic part and the fastener, so that sufficient room for heat dissipation is provided between the heating element and the housing, which facilitates quick heat dissipation of the heating element during operation, so that the heating element is not easy to be damaged, and the service life of the product is prolonged.

### BRIEF DESCRIPTION OF THE DRAWINGS

The specific embodiments of the present invention will be further described in details hereinafter with reference to the drawings, wherein:
Fig. 1 is a partial structure diagram of a baking device;
Fig. 2 is a structure diagram from Fig. 1 after removing a griddle plate;
Fig. 3 is a structure diagram from Fig. 2 after removing a heating element;
Fig. 4 is a section diagram of a griddle plate suspension assembly;
Fig. 5 is a structure diagram of another part of the baking device;
Fig. 6 is a partial enlarged diagram of part A in Fig. 5; and
Fig. 7 is a diagram illustrating a matching of the griddle plate, heating element and elastic part.

### DETAILED DESCRIPTION OF THE EMBODIMENTS

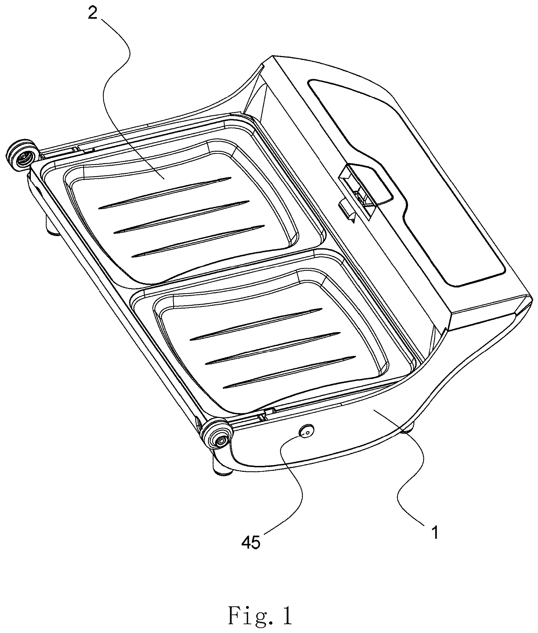

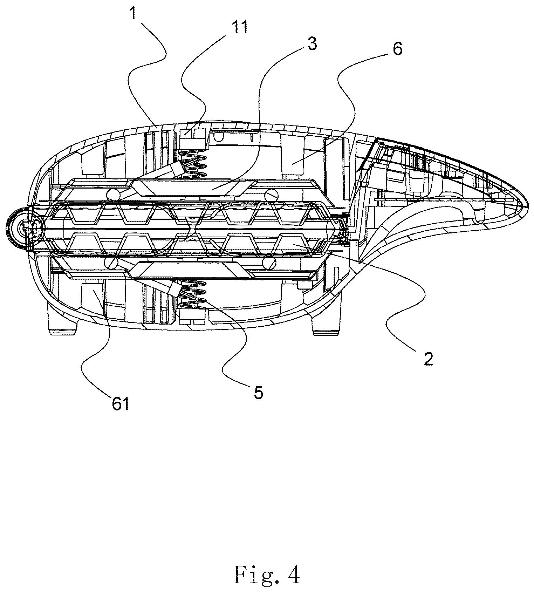

A griddle plate suspension assembly comprises a housing 1, a griddle plate 2 and a heating element 3 arranged in the housing 1, and further comprises a fastener 4 connected with the housing 1 and the griddle plate 2, and an elastic part 5 pushing the heating element 3 to the griddle plate 2. The griddle plate 2 is used for placing food materials. According to different food materials, there are a plurality of choices for the griddle plate 2, i.e., the griddle plate 2 may be a griddle plate for baking bread in Fig. 1, or a griddle plate 2 for baking waffle in Fig. 4, or an overall griddle plate 2 for broiling arranged on an unfolded housings 1 from an upper and lower housing part in Fig. 4.

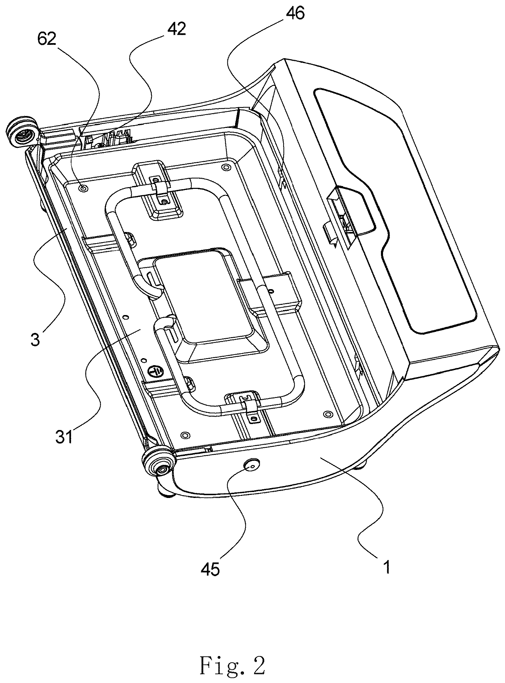

The heating element 3 may comprise a plate body and a heating tube arranged in the plate body shown in Fig. 2. The plate body may be internally provided with a groove 31 sinking backwards to the griddle plate 2. The heating tube is arranged in the groove 31, so that the heating tube may be not contacted with the griddle plate 2 directly, and the heat of the heating tube may be uniformly spread in the groove 31, which facilitates the uniform conduction of the heat of the griddle plate 2. A part of the plate body around the periphery of the groove 31 may be fit with the bottom of the griddle plate 2, which is intended to fix the locations of the griddle plate 2 and the heating element 3 as a whole. Under the matching of the elastic part 5 and the fastener 4, the griddle plate 2 and the heating element 3 can be fit closely.

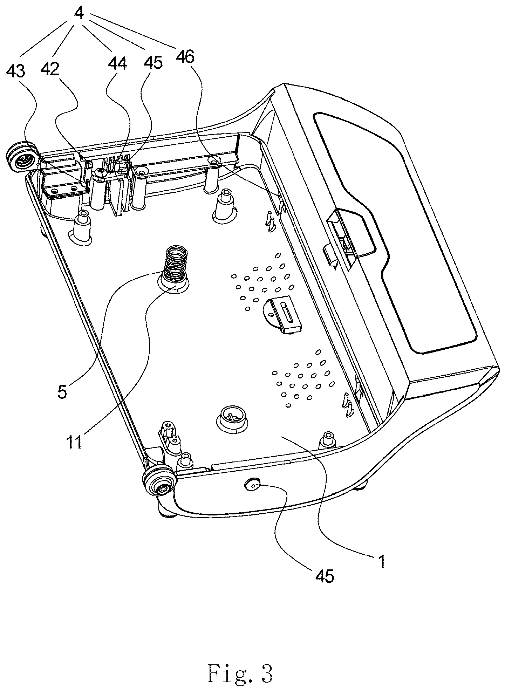

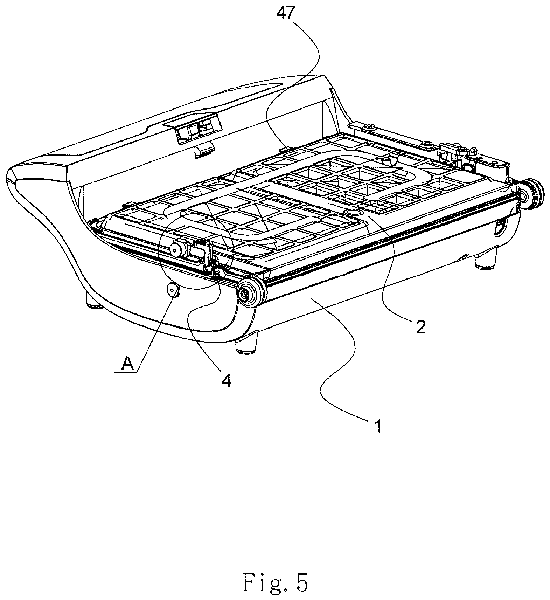

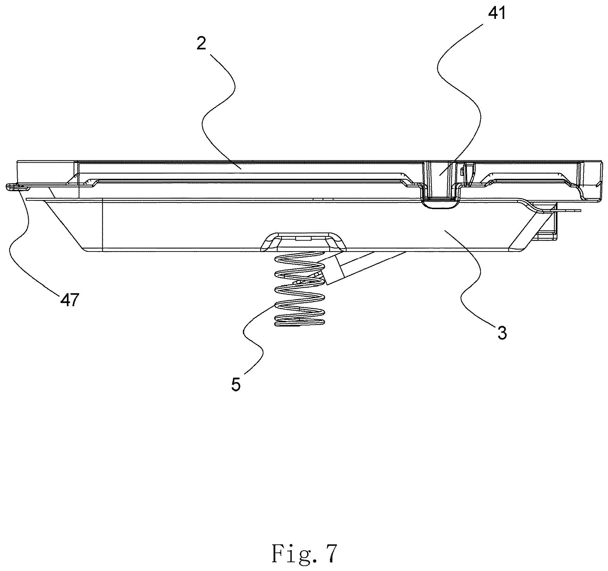

As shown in Fig. 3, Fig. 5 and Fig. 7, the elastic part 5 may comprise a pressure spring connecting the housing 1 with the heating element 3. The pressure spring may be arranged between the housing 1 at the bottom and the bottom surface of the heating element 3, wherein at least two pressure springs may be arranged between the housing 1 at the bottom and the bottom surface of the heating element 3. The housing 1 at the bottom may be provided with a retaining seat 11 sheathing the pressure spring, and the bottom surface of the heating element 3 may be provided with a recess for the pressure spring to embed in. The heating element 3 can be fit with the griddle plate 2 closely through the thrust of the pressure spring, and the pressure spring can locate its two ends through the matching of the retaining seat 11 and the recess, so that the thrust of the pressure spring is stable and the pressure spring may not displace.

The elastic part 5 may comprise a torsional spring connecting the housing 1 with the heating element 3. Two ends of the torsional spring are respectively connected with the housing 1 and the bottom of the heating element 3. The ordinary state of the torsional spring is a compressed state, and preferably, torsional springs are uniformly arranged around the heating element 3.

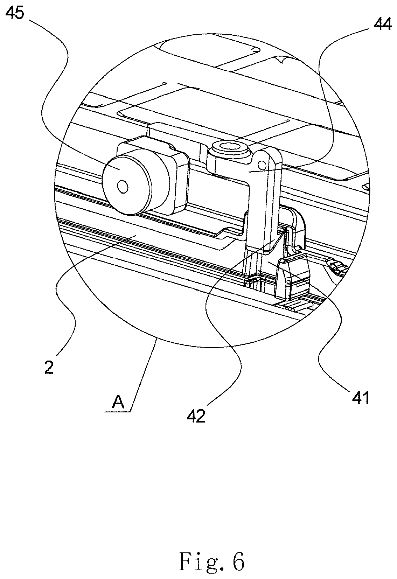

As shown in Fig. 1 to Fig. 7, the fastener 4 comprises a recess 41 arranged on the griddle plate 2, and a bulge 42 arranged on the housing 1 and movably embedded in the recess 41. The bulge 42 enters or leaves the recess 41 through a rotational manner. The housing 1 is provided with a tension spring 43 pulling the bulge 42 to enter the recess 41. One end of the tension spring 43 may be fixed on the housing 1, and the other end is connected with the end of the lever 44 provided with the bulge 42. The effect of the tension spring 43 is to make the bulge 42 buckled in the recess 41 under the ordinary state, in this way, the griddle plate 2 is fixed on the housing 1 under the ordinary state. The fastener 4 further comprises a lever 44 with one end connected with the bulge 42, and a button 45 pulling the other end of the lever 44 to make the bulge 42 leave the recess 41, wherein the button 45 may be manually pressed by a user to make the lever 44 rotate, the lever 44 stretches the tension spring 43 to make the bulge 42 leave the recess 41, in this way, the griddle plate 2 may be taken out for replacement, and the griddle plate 2 for baking waffle may be replaced with the griddle plate 2 for baking sandwich or the overall griddle plate 2.

As shown in Fig.2, Fig. 3 or Fig. 7, the fastener 4 may comprise location holes 46 arranged on the housing 1, and location lugs 47 arranged on the griddle plate 2 and corresponding to the location holes 46. The setting of the location holes 46 and the location lugs 47 is to provide preliminary location before fixing the griddle plate 2 on the housing 1 through the bulge 42 and the recess 41. A specific operation may be that, the location lugs 47 on the griddle plate 2 are buckled in the location holes 46 on the housing 1 firstly, then the griddle plate 2 is entirely arranged on a corresponding location of the housing 1, so that the recess 41 on the griddle plate 2 can be buckled with the bulge 42 on the housing 1, and the settings of the successive two steps enables the griddle plate 2 to be removably fixed with the housing 2 quickly and stably.

The griddle plate suspension assembly further comprises a stopper 6 controlling the travelling of the heating element 3. The setting of the stopper 6 can control and restrict the travelling of movement of the heating element 3 induced by the action of the elastic part 5 onto the heating element 3, so that the heating element 3 may not be ejected out from the housing 1. Through the control over the travelling, the stopper 6 can make the elastic part 5 be always in a compressed state to give enough pre-tightening force to the heating element 3. When the griddle plate 2 is fixed through the fastener 4 to press the heating element 3, the elastic part 5 is capable of providing enough pressure to make the heating element 3 be fit with the griddle plate 2 closely. When replacing the griddle plate 2, the heating element 3 may also be slightly pushed downward through the guiding of the stopper 6 to leave space in the housing 1 for replacing the griddle plate 2.

As shown in Fig. 2 and Fig. 4, the stopper 6 comprises a guidepost 61 passing through the heating element 3 along the pushing direction of the elastic part 5, the guidepost 61 is provided at one end thereof with a block piece 62, wherein the one end of the guidepost 61 passes through the heating element 3, and the other end of the guidepost 61 is connected with the housing 1. The guidepost 61 may be connected with the housing 1 through a thread, the housing 1 is provided with a threaded hole, the guidepost 61 is provided at one end thereof towards the housing 1 with a thread matched with the threaded hole, and the other end of the guidepost 61 is a smooth surface for providing shift guiding for the heating element 3. The heating element 3 may comprise a groove 31 sinking to the elastic part 5, the block piece 62 is located in the groove 31, the heating element 3 moves relative to the guidepost 61, while the block piece 62 moves in the groove 31. If the bottom surface of the griddle plate 2 is level, the depth of the groove 31 is just the travel range of the heating element 3 relative to the guidepost 61. The bottom of the griddle plate 2 may also be provided with a blind hole accommodating the block piece 62, in this way, the block piece 62 can enter the blind hole after its travel exceeding the depth of the groove 31.

When the elastic part 5 is a pressure spring, the pressure spring may be sheathing the guidepost 61. Preferably, the guideposts 61 are uniformly arranged on four corners of the heating element 3.

Alternatively, the heating element 3 may not be provided with the groove 31, and the movement of the block piece 62 is allowed only by the blind hole that may be arranged on the bottom of the griddle plate 2 when the heating element 3 moves relative to the guidepost 61.

A griddle plate suspension assembly is shown in Fig. 1 to Fig. 7, which is a partial structure in the baking device. A housing 1 may comprise an upper part and a lower part which is capable of rotate relative to each other. Both the two parts of the housing 1 are provided with a griddle plate 2, a heating element 3, a fastener 4, an elastic part 5 and a stopper 6. By covering and folding the two parts of the housing 1, the two griddle plates 2 of the baking device are enabled to finish the enclosed baking of bread, sandwich, waffle and other pastries. By relative rotating of the two parts of the housing 1, the upper part and the lower part are unfolded to be level, open baking of meat, vegetable and other food materials can be done. Due to the setting of the fastener 4, the griddle plate 2 may be set as two independent plates respectively arranged on the upper part and the lower part, and may also be set as an overall plate covering the upper part and the lower part at the same time, wherein the overall plate can bake more foods at the same time relative to the independent plates.

## Claims

1. A griddle plate suspension assembly, comprising a housing (1), a griddle plate (2) and a heating element (3) arranged in the housing (1), and further comprising a fastener (4) connecting the housing (1) with the griddle plate (2), and an elastic part (5) pushing the heating element (3) to the griddle plate (2),
**characterized in that**: the fastener comprises a recess (41) arranged on the griddle plate (2), a bulge (42) arranged on the housing (1) and movably embedded in the recess (41), a lever (44) with one end connected with the bulge (42), and a button (45) pulling the other end of the lever (44) to make the bulge (42) leave the recess (41), the bulge (42) rotationally enters the recess (41), and the housing (1) is provided with a tension spring (43) pulling the bulge (42) to enter the recess (41), and the griddle plate suspension assembly comprises a stopper (6) controlling the travelling of the heating element (3), the stopper (6) comprises a guidepost (61) passing through the heating element (3) along the pushing direction of the elastic part (5), the guidepost (61) is provided at one end thereof with a block piece (62), wherein the one end of the guidepost (61) passes through the heating element (3), and the other end of the guidepost (61) is connected with the housing (1).

2. The griddle plate suspension assembly according to claim 1, wherein the elastic part (5) comprises a pressure spring/torsional spring connecting the housing (1) with the heating element (3).

3. The griddle plate suspension assembly according to claim 2, wherein the housing (1) is provided with a retaining seat (11) sheathing the pressure spring.

4. The griddle plate suspension assembly according to claim 1, wherein the fastener (4) comprises location holes (46) arranged on the housing (1) and location lugs (47) arranged on the griddle plate (2) and corresponding to the location holes (46).

5. The griddle plate suspension assembly according to claim 1, wherein the heating element (3) comprises a groove (31) sinking towards the elastic part (5), and the block piece (62) is located in the groove (31).

## Patentansprüche

1. Grillplattenaufhängungsbaugruppe, umfassend ein Gehäuse (1), eine Grillplatte (2) und ein Heizelement (3), das in dem Gehäuse (1) angeordnet ist, und ferner umfassend ein Befestigungselement (4), das das Gehäuse (1) mit der Grillplatte (2) verbindet, und ein elastisches Teil (5), das das Heizelement (3) an die Grillplatte (2) drückt,
**dadurch gekennzeichnet, dass**: das Befestigungselement eine Aussparung (41), die an der Grillplatte (2) angeordnet ist, eine Ausbuchtung (42), die am Gehäuse (1) angeordnet ist und beweglich in die Aussparung (41) eingebettet ist, einen Hebel (44), dessen eines Ende mit der Ausbuchtung (42) verbunden ist, und einen Knopf (45) umfasst, der am anderen Ende des Hebels (44) zieht, um die Ausbuchtung (42) aus der Aussparung (41) zu bringen, die Ausbuchtung (42) rotierend in die Aussparung (41) eintritt und das Gehäuse (1) mit einer Zugfeder (43) versehen ist, die die Ausbuchtung (42) zieht, damit sie in die Aussparung (41) eintritt, und die Grillplattenaufhängungsbaugruppe einen Stopper (6) umfasst, der die Bewegung des Heizelements (3) steuert, der Stopper (6) einen Führungsstift (61) umfasst, der durch das Heizelement (3) entlang der Drückrichtung des elastischen Teils (5) verläuft, der Führungsstift (61) an einem Ende davon mit einem Blockstück (62) versehen ist, wobei das eine Ende des Führungsstifts (61) durch das Heizelement (3) hindurchgeht und das andere Ende des Führungsstifts (61) mit dem Gehäuse (1) verbunden ist.

2. Grillplattenaufhängungsbaugruppe nach Anspruch 1, wobei das elastische Teil (5) eine Druckfeder/Torsionsfeder umfasst, die das Gehäuse (1) mit dem Heizelement (3) verbindet.

3. Grillplattenaufhängungsbaugruppe nach Anspruch 2, wobei das Gehäuse (1) mit einem Haltesitz (11) versehen ist, der die Druckfeder umhüllt.

4. Grillplattenaufhängungsbaugruppe nach Anspruch 1, wobei das Befestigungselement (4) Positionierungslöcher (46), die am Gehäuse (1) angeordnet sind, und Positionierungszapfen (47), die an der Grillplatte (2) angeordnet sind und den Positionierungslöchern (46) entsprechen, umfasst.

5. Grillplattenaufhängungsbaugruppe nach Anspruch 1, wobei das Heizelement (3) eine Auskehlung (31) umfasst, die zum elastischen Teil (5) hin abfällt, und das Blockstück (62) in der Auskehlung (31) angeordnet ist.

## Revendications

1. Ensemble de suspension de plaque de cuisson, comprenant un boîtier (1), une plaque de cuisson (2) et un élément chauffant (3) agencé dans le boîtier (1), et comprenant en outre une attache (4) reliant le boîtier (1) à la plaque de cuisson (2), et une partie élastique (5) poussant l'élément chauffant (3) vers la plaque de cuisson (2),
**caractérisé en ce que** : l'attache comprend un évidement (41) agencé sur la plaque de cuisson (2), un renflement (42) agencé sur le boîtier (1) et encastré de manière mobile dans l'évidement (41), un levier (44) dont une extrémité est reliée au renflement (42) et un bouton (45) tirant l'autre extrémité du levier (44) pour faire sortir le renflement (42) de l'évidement (41), le renflement (42) pénètre en rotation dans l'évidement (41), et le boîtier (1) est pourvu d'un ressort de tension (43) tirant le renflement (42) pour entrer dans l'évidement (41), et l'ensemble de suspension de plaque de cuisson comprend une butée (6) contrôlant le déplacement de l'élément chauffant (3), la butée (6) comprend une tige de guidage (61) traversant l'élément chauffant (3) dans la direction de poussée de la partie élastique (5), la tige de guidage (61) est pourvue à l'une de ses extrémités d'une pièce de blocage (62), dans lequel l'une des extrémités de la tige de guidage (61) passe à travers l'élément chauffant (3), et l'autre extrémité de la tige de guidage (61) est reliée au boîtier (1).

2. Ensemble de suspension de plaque de cuisson selon la revendication 1, dans lequel la partie élastique (5) comprend un ressort de pression/ressort de torsion reliant le boîtier (1) à l'élément chauffant (3).

3. Ensemble de suspension de plaque de cuisson selon la revendication 2, dans lequel le boîtier (1) est pourvu d'un siège de retenue (11) enveloppant le ressort de pression.

4. Ensemble de suspension de plaque de cuisson selon la revendication 1, dans lequel l'attache (4) comprend des trous de positionnement (46) agencés sur le boîtier (1) et des pattes de positionnement (47) agencées sur la plaque de cuisson (2) et correspondant aux trous de positionnement (46).

5. Ensemble de suspension de plaque de cuisson selon la revendication 1, dans lequel l'élément chauffant (3) comprend une rainure (31) s'enfonçant vers la partie élastique (5), et la pièce de blocage (62) est située dans la rainure (31).
